(19) Europäisches Patentamt
European Patent Office
Office européen des brevets

(11) Veröffentlichungsnummer: **0 032 491**
**B1**

(12) # EUROPÄISCHE PATENTSCHRIFT

(45) Veröffentlichungstag der Patentschrift: **26.02.86**

(51) Int. Cl.⁴: **C 08 J 5/04**, C 08 J 5/18, B 29 C 67/14, B 29 C 71/02, B 32 B 25/02, A 63 C 5/14

(21) Anmeldenummer: **80901318.8**

(22) Anmeldetag: **21.07.80**

(86) Internationale Anmeldenummer: **PCT/AT 80/00025**

(87) Internationale Veröffentlichungsnummer: **WO 81/00257 (05.02.81 Gazette 81/4)**

(54) **VERFAHREN ZUR HERSTELLUNG VON FOLIEN AUS ELASTOMEREM MATERIAL, SOWIE DEREN VERWENDUNG BEI VERKLEBUNGEN.**

(30) Priorität: **24.07.79 AT 5087/79**
**14.05.80 AT 2572/80**

(43) Veröffentlichungstag der Anmeldung: **29.07.81 Patentblatt 81/30**

(45) Bekanntmachung des Hinweises auf die Patenterteilung: **26.02.86 Patentblatt 86/9**

(84) Benannte Vertragsstaaten: **AT CH DE FR LI**

(56) Entgegenhaltungen:
**CH-A-377 700**
**DE-A-2 055 022**
**FR-A-1 200 035**
**FR-A-1 344 119**
**FR-A-2 158 041**

(73) Patentinhaber: **ISOVOLTA Österreichische Isolierstoffwerke Aktiengesellschaft, Industriezentrum-Süd, A-2351 Wiener Neudorf (AT)**

(72) Erfinder: **EICHBERGER, Walter, 14 Max Margules Weg, A-2380 Perchtoldsdorf (AT)**
Erfinder: **BLASCHKE, Alfred, 4 Mühlgasse, A-2353 Guntramsdorf (AT)**

(74) Vertreter: **Stampfer, Heinz, ISOVOLTA Österreichische Isolierstoffwerke AG Industriezentrum-Süd, A-2351 Wiener Neudorf (AT)**

**EP 0 032 491 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Verfahren zur Herstellung von Folien aus elastomerem Material, sowie die Verwendung dieser Folien beim Verkleben von Körpern hohen E-Moduls insbesondere von Skibauteilen bei der Skiherstellung, in der Weise, daß die Folie als Zwischenlage in die Klebefuge eingefügt wird, was bewirkt, daß die Scherkräfte, welche beim elastischen Verformen der miteinander verklebten Körper, also insbesondere des Skis, in der Klebefuge auftreten können, herabgesetzt werden.

Bei dem miteinander Verkleben von Körpern hohen E-Moduls ist es bekannt, in die Klebefuge eine Kautschuk-Zwischenlage einzufügen. Dies geschieht vorzugsweise dadurch, daß die miteinander zu verbindenden Oberflächen sowie die Oberflächen der Kautschuk-Folie mit einem unter Wärmezufuhr aushärtenden Kleber beschichtet werden und nach Einfügung der Kautschuk-Folie als Zwischenlage zwischen die zu verbindenden Oberflächen das Ganze dann unter Anwendung von Druck und Wärmezufuhr miteinander verklebt wird.

Bei einem Skifabrikationsverfahren, bei dem ein Klebeverfahren dieser Art vorteilhaft zur Anwendung gelangen kann, werden die Skier aus mehreren zumindest angenähert plattenförmig ausgebildeten Bauteilen hergestellt, die miteinander verklebt werden.

Die bei der Beanspruchung eines so hergestellten Skis auf Biegung von den Klebefugen aufzunehmenden Verformungen sind im allgemeinen umso größer, umso steifer das Material der zu verklebenden Bauteile ist, wobei in der Klebefuge umso größere Scherkräfte auftreten, umso größer diese aufzunehmenden Verformungen bzw. umso geringer die Dicken der Klebefugen sind. Mit dem genannten bekannten Verfahren zum Verkleben zweier Körper wird nun erreicht, daß sich diese Scherkräfte in Grenzen halten. Die bei einer Biegebeanspruchung in der Verklebungsregion auftretende Verformung wird nun im wesentlichen von der Kautschuk-Zwischenlage aufgenommen. Die Wirkung solcher Kautschuk-Zwischenlagen wird in der AT—PS—351.416 der Anmelderin eingehend beschrieben.

Die Verwendung von solchen Kautschuk-Zwischenlagen bei der Verklebung von Körpern hohen E-Moduls ist nun in der Praxis nicht problemlos. Zunächst soll, um eine hohe Güte und Gleichmäßigkeit der Verklebung zu erreichen, die als Kautschuk-Zwischenlage verwendete Gummi-Folie eine geringe Dicke im Bereich von etwa 0,1 bis 0,2 mm bei einer möglichst geringen Dickentoleranz aufweisen. Gummi-Folien in diesem Dickenbereich sind nun aber sehr schwierig herzustellen und das nur mit einer relativ hohen Dickentoleranz. So sind z.B. Gummi-Folien einer Dicke von 0,13 mm nur mit einer Dickentoleranz von $\pm 0{,}03$ mm erhältlich, bei deren Anwendung als Zwischenlagen bei Verklebungen demzufolge die zu erzielende Verklebungsgüte beschränkt ist. Außerdem müssen diese Gummi-Folien zur Erreichung einer genügend guten Haftung beim Verkleben ihrer Oberflächen als zusätzlichen Aufwand einer besonderen·Oberflächenbehandlung durch ein naßchemisches Verfahren unterzogen werden.

Der Erfindung liegt nun die Aufgabe zugrunde, ein Verfahren zur Herstellung von Folien aus elastomeren Material anzugeben, wobei die erzeugten Folien mit einer gegenüber Gummi-Folien verringerter Dickentoleranz hergestellt werden können und dabei keiner besonderen Oberflächenbehandlung zur Erhöhung ihrer Verklebbarkeit bedürfen.

Die der Erfindung zugrundeliegende Aufgabe wird in dem erfindungsgemäßen Verfahren zur Herstellung von Folien au elastomerem Material gelöst, das dadurch gekennzeichnet ist, daß in einem Durchlaufverfahren auf eine Bahn aus einem Wirrfaservlies, das über seine Oberfläche eine gleichmäßige hohe Saugfähigkeit, entsprechend der von Baumwolle, aufweist,

a. Harze auf Basis von Polyisocyanaten und Polyhydroxyverbindungen und/oder Polyaminen, oder

b. Harze auf Basis von Polyepoxydverbindungen und Polyhydroxyverbindungen und/oder Polyaminen und/oder Polycarboxylverbindungen, oder

c. ein Imprägniergemisch auf Kautschuk-Latex-Basis jeweils in flüssigem Zustand in einer solchen Menge daß in der fertigen Folie die Fasern des Faservlieses keine zusammenhängende Matrix mehr bilden, derart, daß sie die mechanischen Eigenschaften des Elastomers nicht wesentlich verändern, wobei die Bahn nach dem Aufbringen der Harze bzw. des Imprägnier gemisches frei schwebend eine Zone erhöhter Temperatur durchläuft und wobei die Harze bzw. das Imprägniergemisch zu einem die Fasern des Faservlieses enthaltendem Elastomer in Folienform trocknen und aushärten. Dabei können die im flüssigen Zustand eingesetzten Harze vorteilhaft in Form von Dispersionen vorliegen.

Aus der FR—A—1 344 119 ist zwar ein Verfahren bekannt, ein Faservlies mit Hilfe eines Imprägniermittels, das ein Elastomer enthält, zu imprägnieren und das aufgebrachte Elastomer auszuvulkanisieren. Diese Imprägnierung dient hier aber dazu, das Vlies für die weitere Verwendung durch einen geringen Bindemittelauftrag, der sich zwischen den Fasern einlagert, mechanisch zu stabilisieren.

Andere bekannte Verfahren, bei denen in ein flächiges Kunststoffmaterial Fasern eingebracht werden, sind z.B. aus der FR—A—2 158 041 und der FR—A—1 200 035 bekannt. Hier dienen die Fasern jedoch immer als Verstärkungsfasern, was beim Anmeldungsgegenstand gerade nicht bezweckt wird.

Gemäß einer vorteilhaften Ausgestaltung des erfindungsgemäßen Verfahrens sind beim Einsatz von Harzen auf Basis von Polyisocyanaten diese Harze reaktiven Harze aus jeweils zumindest einer Polyisocyanatkomponente bzw. einer Polyhydroxykomponente, die vorteilhaft ein Präaddukt aus Polyisocyanaten und Polyhydroxyverbindungen enthalten können. Dabei kann vorteilhaft zumindest eine der bei der Harzzubereitung eingesetzten Polyhydroxykomponenten eine Struktur der Formel

$$HO-[(CH_2)_n-A-O]_m(CH_2)_p[O-A-(CH_2)_n]_qOH$$

aufweisen, wobei A jeweils eine von den Gruppen-$CH_2$— oder

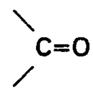

bedeutet und (m+q) die Werte 4 bis 30 annimmt. Dabei nehmen bei der Bedeutung von A gleich —$CH_2$—, n den Wert 3, p den Wert 4 und (m+q) die Werte 6 bis 30 und bei der Bedeutung von A gleich

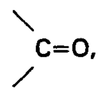,

n den Wert 4, p die Werte 2 bis 6 und (m+q) die Werte 4 bis 20 an.

Nach einer anderen vorteilhaften Ausgestaltung des erfindungsgemäßen Verfahrens, enthält beim Einsatz eines Imprägniergemisches auf Kautschuk-Latex-Basis dieses Gemisch einen carboxylierten Styrol-Butadien-Latex und gegebenenfalls zusätzlich ein Vulkanisationsmittel, welches vorteilhaft ein Formaldehydkondensationsprodukt sein kann. Dabei kann der Festkörpergehalt des eingesetzten Formaldehydkondensationsproduktes im Imprägniergemisch vorteilhaft 5 bis 30 Gew.% betragen.

In einer weiteren vorteilhaften Ausgestaltung des erfindungsgemäßen Verfahrens enthält das Imprägniergemisch zusätzlich einen Naturkautschuk-Latex, wobei das Festkörperverhältnis Styrol-Butadien-Latex zu Naturkautschuk-Latex vorteilhaft zwischen 1:2 bis 2:1 liegt.

Es hat sich gezeigt, daß mithilfe des erfindungsgemäßen Verfahrens auf einfache Weise Folien einer geringen Dicke von beispielsweise 0,1 bis 0,2 mm mit der relativ geringen Dickentoleranz von ±10% hergestellt werden können. Das ist dadurch bedingt, daß die eingesetzten Faservliese eine über ihre Oberflächen gleichmäßig hohe Saugfähigkeit aufweisen und das Aufbringen des sich im flüssigen Zustand befindlichen Harzes bzw. Imprägniergemisches dabei mithilfe von bekannten bewährten Methoden—z.B. durch Imprägnieren oder Streichen—sehr gleichmäßig erfolgen kann. Die gemäß der Erfindung eingesetzten Harze bzw. Imprägniergemische sind, solange sie sich in flüssigem Zustand befinden, auch ohne besondere Zusätze nicht klebrig, was dazu führt, daß das Aufbringen des flüssigen Harzes auf das Faservlies weitgehend problemlos erfolgen kann. Das sich bildende feste Elastomer ist nur im teilweise getrocknetem bzw. ausgehärtetem Zustand klebrig, das heißt also während des Durchlaufes des mit dem Harz bzw. Imprägniergemisch beladenen Faservlieses durch die Zone erhöhter Temperatur, also während ihres Durchganges durch z.B. einen Durchlaufofen. Während dieses Durchlaufens kann das Faservlies aber in bekannter Weise z.B. auf einem Luftkissen schwebend berührungsfrei geführt werden. Dadurch werden verfahrenstechnische Probleme, die durch die Klebrigkeit des trocknenden bzw. aushärtenden Elastomers entstehen könnten, auf einfache Weise vermieden.

In der fertigen Folie bilden die Fasern des Faservlieses keine zusammenhängende Matrix mehr, derart, daß sie die mechanischen Eigenschaften des Elastomers nicht entscheidend verändern.

Die Erfindung betrifft ferner die Verwendung der durch das erfindungsgemäße Verfahren hergestellten Folie aus elastomerem Material, welche Verwendung dadurch gekennzeichnet ist, daß die Folie, die eine Dickentoleranz von ±10% aufweist, als Elastomer-Zwischenlage bei einer Verklebung zweier Körper hohen E-Moduls in der Klebefuge angeordnet wird.

Zur Herstellung der Folie geht man von einem Baumwoll-Wirrfaservlies in Bahnenform aus, welches kontinuierlich von ihrem Wickeldorn abgezogen und über Umlenkwalzen durch eine Wanne mit dem Imprägnierharz bzw. Imprägniergemisch und anschließend durch ein zur Kalibrierung des Harzauftrages dienendes Abquetschwalzenpaar geführt wird.

Beim Einsatz eines Imprägnierharzes, auf dessen Zusammensetzung in der Folge in mehreren Beispielen näher eingegangen wird, weist dieses Imprägnierharz vorzugsweise eine Imprägnierviskosität im Bereich von 10000 bis 100000 mPa.s auf; wobei der optimale Viskositätswert von der Rohdichte des eingesetzten Wirrfaservlieses abhängt und gegebenenfalls durch Zusatz eines geeigneten nicht reaktiven Lösungsmittels eingestellt werden kann.

Beim Einsatz eines Imprägniergemisches auf Kautschuk-Latex-Basis, das in Form einer wässrigen Dispersion vorliegt und für dessen Zusammensetzung in der Folge zwei Rezepturen angegeben sind, weist dieses Imprägniergemisch vorzugsweise eine Imprägnierviskosität von 50 bis 500 mPa.s auf, wobei der optimale Viskositätswert—analog wie beim Einsatz von Imprägnierharzen—von der Wirrfaservlies-Rohdichte abhängt und gegebenenfalls durch Zugabe von Wasser eingestellt werden kann.

Nach Durchlaufen des Imprägnierwerkes und Passieren der Abquetschwalzen tritt die imprägnierte Faservliesbahn in einen Heißluftschacht ein, in dem sie frei schwebend mehrere gesondert steuerbare Heizzonen durchläuft und an dessen Ende als praktisch nicht mehr klebende Folienbahn abgezogen und danach als Endlosband aufgewickelt wird.

In nachstehender Tabelle sind für unterschiedliche Dicken der herzustellenden Folie die Qualität des

eingesetzten Vlieses bzw. der Harz-bzw. Imprägniermittel-Auftrag (in Prozenten des Vliesrohgewichtes und gerechnet in getrocknetem und/oder ausgehärtetem Zustand) angegeben:

| Foliendicke in mm | Baumwoll-Wirrfaservlies Grammatur in g/m² | Auftrag % |
|---|---|---|
| 0,15 | 18 | ca. 400 |
| 0,20 | 26 | ca. 650 |
| 0,25 | 26 | ca. 900 |

Nachstehend sind fünf bevorzugte Imprägnierharzrezepturen angegeben:

1. Zur Herstellung eines lösungsmittelfreien Imprägnierharzes wird (jeweils in Gewichtsteilen angegeben) aus:

66 Teilen Diphenylmethan-4,4'-diisocyanat als technisches Rohprodukt (NCO-Gehalt ca, 31%) (bezogen unter dem Handelsnamen Desmodur VL von der Firma BAYER) und
200 Teilen eines linearen hydroxylgruppenhaltigen Polyäthers mit einem durchschnittlichen Molgewicht von 2000 und einem OH-Gehalt von 1,7% (bezogen unter dem Handelsnamen Desmophen 1900U von der Firma BAYER) mit
0,6 Teilen Zinkoctoat als Katalysator

durch zweistündiges Erhitzen ein Präaddukt hergestellt, dem danach bei Raumtemperatur 7 Teile 1,4-Butandiol zugesetzt werden.

Die Gelierzeit des so hergestellten Imprägnierharzes beträgt bei Raumtemperatur mehr als 4 Stunden.

2. Zur Herstellung eines Imprägnierharzes wird bei Raumtemperatur ein Gemisch gebildet bestehend (jeweils in Gewichtsteilen) aus:

212 Teilen einer 67%igen Lösung eines Präadduks aus Trimethylolpropan-Toluylendiisocyanat mit NCO-Gehalt von ca. 11,5% und einem Äquivalentgewicht von ca. 362 in Äthylglycolacetat als Lösungsmittel (bezogen unter dem Handelsnamen Desmodur L von der Fa.BAYER)
98 Teilen eines verzweigten hydroxylgruppenhaltigen Polyätheresters mit ca. 5% OH-Gehalt und einem Äquiventgewicht von ca. 340 (bezogen unter dem Handelsnamen Desmophen 1150 von der Fa. BAYER)
245 Teilen eines linearen hydroxylgruppenhaltigen Polyesters mit ca. 1,7% OH-Gehalt und einem durchschnittlichem Molgewicht von ca. 2000 (bezogen unter dem Handelsnamen Desmophen 1652 von der Fa. BAYER) sowie
0,5 Teilen N-Methylmorpholin als Katalysator.

Das so hergestellte Imprägnierharz hat beim Raumtemperatur eine Gelierzeit von mehr als 12 Stunden.

3. Zur Herstellung eines Imprägnierharzes wird (jeweils in Gewichtsteilen angegeben) eine Mischung von

66 Teilen Polytetrahydrofuran (Molgewicht ca. 650) als Polyhydroxykomponente,
33,3 Teilen Isophorondiisocyanat,
6,3 Teilen 1,4-Butandiol,
20 Teilen Äthylglycolacetat und
0,03 Teilen Dibutylzinndilaurat

unter ständigem Rühren bis zu 75°C erwärmt und die Rührung dann bis zur Beendigung der Polyadditionsreaktion (Verschwinden des NCO-Gehaltes) fortgesetzt und danach abgekühlt.

Das Imprägnierharz erhält man dann durch Versetzen dieser Mischung mit

25,3 Teilen eines technischen Trimethylol-Toluylendiisocyanat-Addukts in Form einer 67%igen Lösung in Äthylglycolacetat.

Die Gelierzeit des so hergestellten Imprägnierharzes beträgt bei Raumtemperatur mehr als 6 Stunden.

4. Zur Herstellung des Imprägnierharzes werden (jeweils in Gewichtsteilen angegeben) zunächst

41,5 Teile Polycaprolacton (Molgewicht ca. 830) als Polyhydroxykomponente und
20 Teile Äthylglycolacetat

zur Herstellung einer klaren Lösung gemischt.

Das Imprägnierharz erhält man dann durch Versetzen dieser Lösung mit

42 Teilen eines Trimethylolpropan-Isophorondiisocyanat-Adduktes in Form einer 70%igen Lösung in Äthylglykolacetat.

Die Gelierzeit dieses Imprägnierharzes beträgt bei Raumtemperatur mehr als 8 Stunden.

5. Das Imprägnierharz besteht aus einem bei Raumtemperatur hergestellten Gemisch (jeweils in Gewichtsteilen) aus:

100 Teilen eines carboxyl-endgruppenhaltigen Copolymers aus Butadien-Acrylnitril mit durchschnittlichem Molgewicht von 3300 und einer Carboxylfunktionalität von ca. 1,8
12 Teilen Glycerintriglycidäther mit einem Epoxid-äquivalent von ca. 120—140
0,5 Teilen 2,4,6-Tris-(dimethylaminomethyl)phenol
20 Teilen Furnace-Ruß
40 Teilen Toluol als Lösungsmittel

Dieses Imprägnierharz hat bei Raumtemperatur eine Gelierzeit von mehr als 24 Stunden.

Nachstehend sind zwei bevorzugte Rezepturen von Imprägniergemischen auf Kautschuk-Latex-Basis angegeben:

6. Zur Herstellung eines Imprägniergemisches auf Kautschuk-Latex-Basis werden (jeweils in Gewichtsteilen angegeben)

100 Teile (bezogen auf Trockensubstanz) eines carboxylierten Butadien-Styrol-Copolymer-Latex mit einem Styrolanteil von 45 Gew.% und einem Carbonsäureanteil von 3 Gew% im Copolymer und
30 Teile (bezogen auf Festharz) eines methylverätherten Melamin-Formaldehydharzes, dessen Melamin-Formaldehydverhältnis 1:3,1 beträgt,

gemischt, wobei man den Gesamtanteil an Trockensubstanz auf etwa 55 Gew% einstellt.

Die Lagerstabilität dieser Imprägniermischung beträgt etwa 12 Stunden.

7. In einer bevorzugten Variante dieses Imprägniergemisches nach Rezeptur 6 zusätzlich

65 bis 260 Teile (bezogen auf Kautschuktrockensubstanz) eines 60%igen zentrifugierten und mit 0,7% Ammoniak stabilisierten Naturlatex, wie er üblicherweise im Handel erhältlich ist,

zugesetzt werden.

Mit dieser Naturlatex zugabe kann die mechanische Zähigkeit des resultierenden Elastomers erhöht bzw. in einem weiten Bereich auf den gewünschten Wert eingestellt werden.

Die durch das erfindungsgemäße Verfahren hergestellten Folien werden bei Verklebungen, insbesondere bei Metall-Metall-Verklebungen und insbesondere bei der Skifabrikation eingesetzt, wobei sie als Zwischenlagen in den Klebefugen angeordnet werden. Dabei ergeben sich insbesondere bei Verwendung von handelsüblichen Klebern auf Epoxydharzbasis gute und sehr gleichmäßige Verklebungsqualitäten; Trommelschälversuche nach DIN 53295 ergeben hohe Schälfestigkeitswerte.

**Patentansprüche**

1. Verfahren zur Herstellung von Folien aus elastomerem Material, dadurch gekennzeichnet, daß in einem Durchlaufverfahren auf eine Bahn aus einem Wirrfaservlies, das über seine Oberfläche eine gleichmäßig hohe Saugfähigkeit, entsprechend der von Baumwolle, aufweist,

a. Harze auf Basis von Polyisocyanaten und Polyhydroxyverbindungen und/oder Polyaminen, oder

b. Harze auf Basis von Polyepoxydverbindungen und Polyhydroxyverbindungen und/oder Polyaminen und/oder Polycarboxylverbindungen, oder

c. ein Imprägniergemisch auf Kautschuk-Latex-Basis jeweils in flüssigem Zustand in einer solchen Menge aufgebracht werden, daß in der fertigen Folie die Fasern des Faservlieses keine zusammenhängende Matrix mehr bilden, derart, daß sie die mechanischen Eigenschaften des Elastomers nicht wesentlich verändern, wobei die Bahn nach dem Aufbringen der Harze bzw. des Imprägnier gemisches frei schwebend eine Zone erhöhter Temperatur durchläuft und, wobei die Harze bzw. das Imprägniergemisch zu einem die Fasern des Faservlieses enthaltenden Elastomer in Folienform trocknen und aushärten.

2. Verfahren nach Anspruch 1, dadurch gekennzeichnet, daß als Faservlies ein Baumwoll-Wirrfaservlies eingesetzt wird.

3. Verfahren nach Anspruch 1 oder 2, dadurch gekennzeichnet, daß die im flüssigen Zustand eingesetzten Harze in Form von Dispersionen vorliegen.

4. Verfahren nach einem der Ansprüche 1 bis 3, dadurch gekennzeichnet, daß beim Einsatz von Harzen auf Basis von Polyisocyanaten diese Harze reaktive Harze aus zumindest einer Polyisocyanatkomponente und zumindest einer Polyhydroxykomponente sind.

5. Verfahren nach Anspruch 4, dadurch gekennzeichnet, daß zumindest eine der bei der Harzzubereitung eingesetzten Polyhydroxykomponenten eine Struktur der Formel

$$HO-[(CH_2)_n-A-O]_m(CH_2)_p[O-A-(CH_2)_n]_qOH$$

aufweisen, wobei A gleich $-CH_2-$ bedeutet und n den Wert 3, p den Wert 4 und (m+q) die Werte 6 bis 30 annimmt, oder wobei A gleich

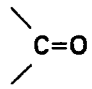

bedeutet und n den Wert 4, p die Werte 2 bis 6 und (m+q) die Werte 4 bis 20 annimmt.

6. Verfahren nach einem der Ansprüche 4 bis 5, dadurch gekennzeichnet, daß die reaktiven Harze zumindest ein Präaddukt aus Polyisocyanaten und Polyhydroxyverbindungen enthalten.

7. Verfahren nach einem der Ansprüche 1 bis 3, dadurch gekennzeichnet, daß beim Einsatz eines Imprägniergemisches auf Kautschuk-Latex-Basis dieses Gemisch einen carboxylierten Styrol-Butadien-Latex enthält.

8.. Verfahren nach Anspruch 7, dadurch gekennzeichnet, daß das eingesetzte Imprägniergemisch zusätzlich ein Vulkanisationsmittel enthält.

9. Verfahren nach Anspruch 8, dadurch gekennzeichnet, daß das Vulkanisationsmittel ein Formaldehydkondensationsprodukt ist.

10. Verfahren nach Anspruch 9, dadurch gekennzeichnet, daß der Festkörpergehalt des eingesetzten Formaldehydkondensationsproduktes im Imprägniergemisch 5 bis 30 Gew.% beträgt.

11. Verfahren nach einem der Ansprüche 7 bis 10, dadurch gekennzeichnet, daß das Imprägniergemisch zusätzlich einen Naturkautschuk-Latex enthält.

12. Verfahren nach Anspruch 11, dadurch gekennzeichnet, daß das Festkörperverhältnis Styrol-Butadien-Latex zu Naturkautschuk-Latex zwischen 1:2 bis 2:1 liegt.

13. Folie aus elastomerem Material, dadurch gekennzeichnet, daß sie nach dem Verfahren nach einem der Ansprüche 1 bis 12 hergestellt ist.

14. Verwendung der Folie nach Anspruch 13, dadurch gekennzeichnet, daß die Folie, die eine Dickentoleranz von ±10% aufweist, als Elastomer-Zwischenlage bei einer Verklebung zweier Körper hohen E-Moduls in der Klebefuge angeordnet wird.

**Revendications**

1. Procédé pour la fabrication de feuilles à partir d'une matière élastomère, caractérisé en ce que, dans une opération continue, on dépose sur une bande d'une nappe de fibres entremêlées, qui comporte sur sa surface une grande capacité uniforme d'absorption, correspondant à celle du coton,

a) des résines à base de polyisocyanates et de composés polyhydroxy et/ou de polyamines; ou

b) des résines à base de composés polyépoxydes et de composés polyhydroxy et/ou de polyamines et/ou de composés polycarboxyles; ou

c) un mélange d'imprégnation à base de latex de caoutchouc respectivement à l'état liquide et dans une quantité telle que, dans la feuille finale, les fibres de la nappe de fibres ne forment plus une matrice cohérente, de telle sorte qu'elles ne modifient plus sensiblement les propriétés mécaniques de l'élastomère, la bande, après le dépôt des résines ou du mélange d'imprégnation, traversant de façon librement flottante une zone de plus haute température, et les résines ou le mélange d'imprégnation faisant durcir et sécher sous forme d'une feuille l'élastomère contenant les fibres de la nappe de fibres.

2. Procédé selon la revendication 1, caractérisé en ce que l'on utilise comme nappe de fibres une nappe de fibres entremêlées en coton.

3. Procédé selon la revendication 1 ou 2, caractérisé en ce que les résines utilisées à l'état liquide se présentent sous la forme de dispersions.

4. Procédé selon une des revendications 1 à 3, caractérisé en ce que, lors de l'utilisation de résines à base de polyisocyanates, ces résines sont des résines réactives contenant au moins un composant polyisocyanate et au moins un composant polyhydroxy.

5. Procédé selon la revendication 4, caractérisé en ce qu'au moins un des composants polyhydroxy utilisé lors de la préparation de la résine a une structure correspondant à la formule:

$$HO-[(CH_2)_n-A-O]_m(CH_2)_p[O-A-(CH_2)_n]_qOH$$

où:

A représente $-CH_2-$; et
n a la valeur 3,
p la valeur 4, et
(m+q) les valeurs 6 à 30,

ou bien lorsque

A représente

$$>C=O,$$

n prend la valeur 3,
p les valeurs 2 à 6, et
(m+q) les valeurs 4 à 20.

6. Procédé selon une des revendications 4 et 5, caractérisé en ce que les résines réactives contiennent au moins un pré-adduct formé de polyisocyanates et de composés polyhydroxy.

7. Procédé selon une des revendications 1 à 3, caractérisé en ce que, lors de l'introduction d'un mélange d'imprégnation à base de latex de caoutchouc, ce mélange contient un latex carboxylé de styrène-butadiène.

8. Procédé selon la revendication 7, caractérisé en ce que le mélange d'imprégnation introduit contient additionnellement un agent de vulcanisation.

9. Procédé selon la revendication 8, caractérisé en ce que l'agent de vulcanisation est un produit de condensation de formaldéhyde.

10. Procédé selon la revendication 9, caractérisé en ce que la teneur en solides du produit de condensation de formaldéhyde introduit dans le mélange d'imprégnation est comprise entre 5 et 30% en poids.

11. Procédé selon une des revendications 7 à 10, caractérisé en ce que le mélange d'imprégnation contient additionnellement un latex de caoutchouc naturel.

12. Procédé selon la revendication 11, caractérisé en ce que le rapport de solides entre le latex de styrène-butadiène et le latex de caoutchouc naturel est compris entre 1/2 et 2/1.

13. Feuille en matière élastomère, caractérisée en ce qu'elle est fabriquée par le procédé selon une des revendications 1 à 12.

14. Utilisation de la feuille selon la revendication 13, caractérisée en ce que la feuille, qui présente une tolérance d'épaisseur de ±10%, est disposée comme couche intermédiaire en élastomère dans le joint collé dans le cas d'un collage de deux corps à grand module d'élasticité.

## Claims

1. Process for the manufacture of sheeting of elastomeric material, characterised in that, in a continuous operation, there are applied onto a web of a random fibre fleece which has uniformly high absorbency over its surface, corresponding to that of cotton,

a. resins based on polyisocyanates and polyhydroxy compounds and/or polyamines or

b. resins based on polyepoxide compounds and polyhydroxy compounds and/or polyamines and/or polycarboxylic compounds or

c. an impregnating mixture based on rubber latex, in each case in a liquid state, in an amount such that in the finished sheeting the fibres of the fibre fleece no longer form a coherent matrix so that they do not significantly alter the mechanical properties of the elastomer, the web, after application of the resins or of the impregnating mixture, travelling in a freely floating manner through a zone at an elevated temperature, where the resins or the impregnating mixture are/is dried and hardened to give an elastomer which is in the form of sheeting and contains the fibres of the fibre fleece.

2. Process according to Claim 1, characterized in that a cotton random fibre fleece is employed as the fibre fleece.

3. Process according to Claim 1 or 2, characterised in that the resins employed in the liquid state are in the form of dispersions.

4. Process according to one of Claims 1 to 3, characterised in that when using resins based on polyisocyanates, these resins are reactive resins obtained from at least one polyisocyanate component and at least one polyhydroxy component.

5. Process according to Claim 4, characterised in that at least one of the polyhydroxy components employed in the preparation of the resin has a structure of the formula

$$HO-[(CH_2)_n-A-O]_m-(CH_2)_p-[O-A-(CH_2)_n]_q-OH$$

wherein A is $-CH_2-$ and n assumes a value of 3, p a value of 4 and (m+q) a value from 6 to 30, or wherein A is

$$>C=O$$

and assumes a value of 4, p a value from 2 to 6 and (m+q) a value from 4 to 20.

6. Process according to one of Claims 4 to 5, characterised in that the reactive resins contain at least one pre-adduct prepared from polyisocyanates and polyhydroxy compounds.

7. Process according to one of Claims 1 to 3, characterised in that when using an impregnating mixture based on rubber latex, this mixture contains a carboxylated styrene-butadiene latex.

8. Process according to Claim 7, characterised in that the impregnating mixture employed additionally contains a vulcanising agent.

9. Process according to Claim 8, characterised in that the vulcanising agent is a formaldehyde condensate.

10. Process according to Claim 9, characterised in that the solids content of the formaldehyde condensate employed in the impregnating mixture is 5 to 30% by weight.

11. Process according to one of Claims 7 to 10, characterised in that the impregnating mixture additionally contains a natural rubber latex.

12. Process according to Claim 11, characterised in that the solids ratio of the styrene/butadiene latex to the natural rubber latex is between 1:2 and 2:1.

13. Sheeting of elastomeric material, characterised in that it has been manufactured by the process according to one of Claims 1 to 12.

14. Use of the sheeting according to Claim 13, characterised in that the sheeting, which has a thickness tolerance of ±10%, is used as an elastomer interlayer in the glue joint when gluing together two bodies of high modulus of elasticity.